# EUROPEAN PATENT APPLICATION

(11) **EP 4 681 832 A1**
(43) Date of publication of application: **21.01.2026**
(21) Application number: 25188466.4
(22) Date of filing: 09.07.2025
(51) Int. Cl.: B09B 3/70, B09B 3/80, C22B 1/00, C22B 3/08, C22B 3/20, C22B 3/22, C22B 3/44, C22B 7/00, C22B 11/00, C22B 15/00, C22B 21/00, C22B 3/00, C22B 25/06, C25C 1/12, C25C 1/14, C25C 1/20, C25C 1/22, B01D 11/02, B09B 3/30, C25C 1/02, B09B 101/15

(54) **HYDROMETALLURGICAL PROCESS FOR THE SELECTIVE RECOVERY OF SILVER**

(30) Priority: 18.07.2024 IT 202400016732
(71) Applicant: Smart Waste Engineering-Società a Responsabilità Limitata, 67100 L'Aquila (AQ) (IT); Università degli Studi dell'Aquila, 67100 L'Aquila (AQ) (IT)
(72) Inventor: VEGLIÒ, Francesco, 65010 Spoltore (PE) (IT); IPPOLITO, Nicolò Maria, 00186 Roma (RM) (IT); ROMANO, Pietro, 67054 Civitella Roveto (AQ) (IT); BIRLOAGA, Ionela Poenita, 135200 Gaesti (Dambovita) (RO); PASSADORO, Marco, 67100 L'Aquila (AQ) (IT); ZUEVA, Svetlana Borisovna, 64026 Roseto degli Abruzzi (TE) (IT); MURRU, Walter, 20063 Cernusco sul Naviglio (MB) (IT); VEGLIÒ, Francesco Maria, 67100 L'Aquila (AQ) (IT)
(74) Representative: Cavattoni, Raimondi & Luppi Srl

(57) **Abstract**

A hydrometallurgical process for the selective recovery of silver from a solid waste material, said solid waste material deriving from waste electrical and electronic equipment and/or from exhausted Ag-based catalysts, comprises the following steps: **I)** Subjecting said solid material to acid leaching to dissolve said silver by using a leaching solution, wherein said leaching solution is an aqueous solution of sulphuric acid, ferric sulphate and thiourea (H₂SO₄-Fe₂(SO₄)₃-CH₄N₂S), said subjecting to acid leaching being carried out at ambient temperature and at atmospheric pressure, in a single stage or in multiple stages; filtering the exiting leaching solution and subjecting the residual solid material to washing with water; wherein said sulphuric acid, said ferric sulphate and said thiourea are contained in said leaching solution at the following concentrations: sulphuric acid 0.1-0.5 M; ferric sulphate 10-40 g/L; thiourea 10-40 g/L; **II)** Recovering said water used during said washing in said step I, replenishing said water with said sulphuric acid, said ferric sulphate and said thiourea and, when said subjecting to acid leaching is carried out in multiple stages, using said water as a leaching solution in said multiple stages, wherein said replenishing said water comprises adding said sulphuric acid, said ferric sulphate and said thiourea according to the following percentages compared to the dosage thereof in said step I: sulphuric acid 10-50%; ferric sulphate 80-100%; thiourea 25-50%; **III)** Subjecting said leaching solution exiting from said step I to electrolysis under stirring to recover said silver as metallic silver at the cathode and regenerate said thiourea; recovering said leaching solution at the end of said electrolysis; **IV)** Replenishing said leaching solution recovered at the end of said electrolysis in said step III con said sulphuric acid, said ferric sulphate and said thiourea, and, after said replenishing, reusing said leaching solution to treat a new solid waste material.

## Description

The invention relates to a hydrometallurgical process for selectively recovering Ag from rigid and flexible electronic boards, photovoltaic panels and exhausted Ag-based catalysts, as well as for recovering precious and base metals from waste electrical and electronic equipment (WEEE).

The silver is a fundamental chemical element for the operation and integrity of a vast range of industrial ecosystems. This precious metal is known for the exceptional electric and heat conductivity thereof, as well as for the resistance thereof to corrosion. The silver is widely used in the electronics industry for the high electrical conductivity thereof. In particular, the silver is a key component in soldering electronic components, in electric contacts and in printed circuits, enabling electric current to be transferred efficiently and ensuring optimum performance in electronic devices.

Again owing to the high electric conductivity thereof, the silver is one of the key materials used for the conversion of solar energy into electric energy, in photovoltaic solar cells, now a driver of the energy transition. The silver is also used in the chemical industry as a catalyst for different chemical reactions. In conclusion, this metal has a crucial importance in numerous technical and industrial applications, turning out to be a fundamental element for the technological progress of the modern society.

In the light of a transition to a circular economy, it is fundamental to provide for a recovery of precious and critical raw materials from end-of-life products. Therefore, in recent years different methods have been developed for recovering silver from different types of industrial waste, in particular WEEE.

CN116984342A discloses a process for recovering the silver from photovoltaic panels, comprising the following steps: mechanical dismantling of the photovoltaic panels, recycling of the aluminium frame, calcination of the residue at a temperature of 400 - 600 °C, recycling of the glass, leaching the remaining crystalline silicon powder with sulphuric acid (concentration 2-4 mol/L, temperature 60-75 °C, reaction time 2-4 h), recovering aluminium sulphate, leaching the residual solid material by nitric acid (concentration 2-4 mol/L, temperature 30-45 °C, reaction time 3-5 h), recovery of the silver by chemical reduction, leaching the residual solid material with phosphoric acid and detaching a layer of silicon nitride to produce silicon powder .

The above disclosed process is substantially disadvantageous, since it has numerous drawbacks. Firstly, the process requires high energy consumption that is necessary for performing the heat treatment (calcination; hot leaching), as well as high concentrations of the reagents used for the hydrometallurgical treatments. Moreover, the high reaction times affect productivity adversely.

CN115786713A discloses a process for recovering silver and aluminium from end-of-life photovoltaic panels. The process comprises a preliminary heat treatment (500-600 °C under inert atmosphere), followed by acid leaching with methane sulphonic acid and hydrogen peroxide at 60-75°C to dissolve silver and aluminium. The solubilized aluminium is removed by adding NaOH and consequent increase in pH, while the solubilized silver is recovered (as AgCl) through precipitation by adding HCl.

Also the process proposed by CN115786713A requires a great energy consumption, which is necessary both for the purposes of the thermal pretreatment and during the hydrometallurgical step (hot leaching), thus resulting in scarcely convenient from an economic point of view.

Therefore, the need is strongly felt by the skilled persons for a process for the selective recovery of the silver from waste materials, such for example end-of-life photovoltaic panels and other WEEE, which enables the drawbacks disclosed above to be overcome.

### Objects of the invention

An object of the invention is to improve known pyro/hydrometallurgical processes for selectively recovering the silver from waste materials, in particular from WEEE and exhausted catalysts.

Another object is to provide a hydrometallurgical process for selectively recovering the silver from waste materials, in particular WEEE and exhausted catalysts, which enables the heat treatments and the consequent high energy consumption to be eliminated.

A further object is to provide a hydrometallurgical process for selectively recovering the silver from waste materials, in particular WEEE and exhausted catalysts, which enables the concentrations and quantities of reagents to be used to be reduced significantly.

Still another object is to provide a hydrometallurgical process for selectively recovering the silver from waste materials, in particular WEEE and exhausted catalysts, which enables reaction times to be reduced and productivity to be improved.

### Short description of the invention

According to the invention, a hydrometallurgical process for selectively recovering the silver from waste materials is provided, as defined in claim 1.

Owing to the invention, a process is made available for selectively recovering the silver from WEEE, such for example rigid and flexible electronic boards and photovoltaic panels, and from exhausted silver-based catalysts, such as for example exhausted catalysts for producing ethylene oxide, which enables the drawbacks of the prior art to be overcome.

In fact, the process according to the invention is carried out at ambient temperature and atmospheric pressure, which enables the energy expenditure caused by known methods to be avoided. Moreover, the process according to the invention is based on the so-called "Minimum-Liquid Discharge" (MLD) approach, providing for the recycling of a large part of the water used and a reduced generation of waste liquid to be disposed of.

Reagent consumption is less than in known processes since (as will be disclosed in detail below) the process according to the invention enables one of the reagents (thiourea) used in the leaching step to be partially regenerated. Lastly, reaction times are shorter than in known methods.

### Short description of the drawings

The invention can be better understood and implemented with reference to the appended drawing that illustrates an embodiment thereof by way of non-limiting example, in which:

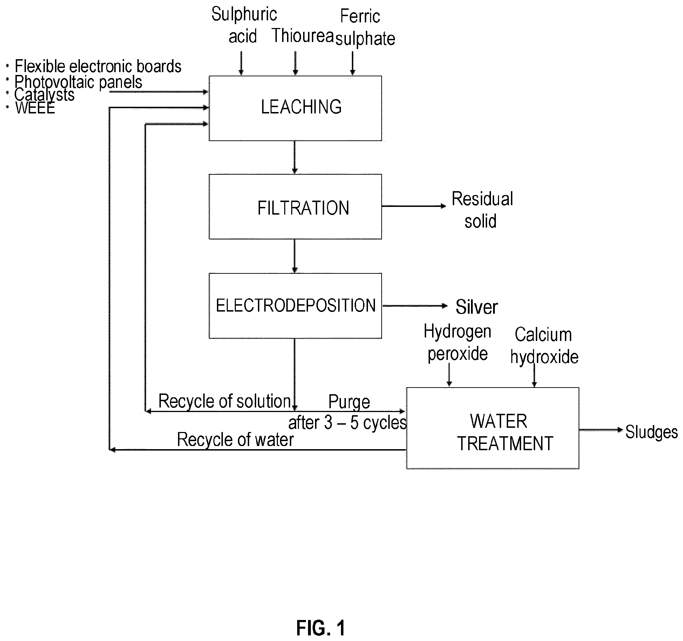

Figure 1 is a flow diagram showing the main steps of the process according to the invention.

### Detailed description of the invention

In the present description and in the attached claims:
- the wordings "WEEE" and "waste electrical and electronic equipment" are considered to be synonyms and are used in a mutually interchangeable manner;
- the components (sulphuric acid, ferric sulphate and thiourea) of the leaching solution according to the invention can be indicated collectively by the term "reagents";
- The term "exiting leaching solution" indicates a leaching solution that has completed one or more leaching stages and can be subjected to further treatments, such as for example filtration and electrolysis;
- thiourea is identified by the equivalent formulas CH₄N₂S and SC(NH₂)₂.

The hydrometallurgical process according to the invention enables Ag to be recovered selectively from WEEE, such as rigid and flexible electronic boards and photovoltaic panels, as well as from silver-based catalysts, such as exhausted catalysts for producing ethylene oxide.

The hydrometallurgical process according to the invention is substantially simple, enables high silver recovery yields to be obtained and, if the raw material consists of flexible electronic boards, it can be implemented without the need to reduce the dimensions of the latter, namely without preliminary mechanical treatments.

In one embodiment, the process according to the invention comprises the following main steps:
I) Acid leaching of the solid material, in a single stage or in multiple stages, using a leaching solution consisting of an aqueous solution of sulphuric acid, ferric sulphate and thiourea (H₂SO₄-Fe₂(SO₄)₃-CH₄N₂S), so as to obtain dissolution of the silver, followed by filtration of the exiting leaching solution and washing of the residual solid material with water;
II) Recovery of the washing water used in step I) and reuse thereof, after replenishing with the components of the leaching solution (reagents), for the subsequent leaching stages;
III) Electrolysis of the exiting leaching solution from step I) for the recovery of metallic silver at the cathode and for the regeneration of thiourea, followed by recovery of the leaching solution at the end of electrolysis;
IV) Reuse of the leaching solution recovered at the end of step III) for the treatment of a new solid material, by adding small quantities of replenishing reagents (H₂SO₄ 10-25% and CH₄N₂S 10-30% with respect to the dosage required in step I) and totally replenishing (100% of dose required in step I) Fe₂(SO₄)₃;
V) Treatment of the leaching solution recovered at the end of step III) with an advanced chemical oxidation process and subsequent neutralization (pH 7-8.5), with consequent reuse of the water deriving from the aforesaid treatment to prepare new leaching solution to be used in a subsequent cycle.

Step V of the process according to the invention is not carried out for each process cycle, but periodically, in particular after 3 - 5 successive cycles. Therefore, step V is carried out after repeating steps I to IV 3 - 5 times consecutively and, when step V is carried out, step IV is omitted. Step V enables water consumption to be reduced significantly in the hydrometallurgical method according to the invention.

In one embodiment, the hydrometallurgical process according to the invention comprises only steps I to IV.

The solid material to be treated is subjected to acid leaching according to step I) to solubilize Ag by using an aqueous solution (leaching solution) containing sulphuric acid, ferric sulphate and thiourea (H₂SO₄-Fe₂(SO₄)₃-CH₄N₂S), having pH comprised between 0.5 and 1.

In one embodiment, the reagents are present in the leaching solution at the following concentrations:
- 0.1-0.5 M of sulphuric acid ;
- 10-40 g/L of ferric sulphate;
- 10-40 g/L of thiourea.

In another embodiment, the reagents are present in the leaching solution at the following concentrations:
- 0.2-0.4 M of sulphuric acid ;
- 20-30 g/L of ferric sulphate;
- 20-30 g/L of thiourea.

The acid leaching step is carried out at a concentration of the solid material that is equal to 10-20% of the volume of the leaching solution, for a time of 1-3 hours, at ambient temperature and at atmospheric pressure. The acid leaching step is carried out under stirring or without stirring depending on the dimensions of the particles forming the treated solid material. At the end of the leaching reaction, filtration is carried out.

Iron is reduced from oxidation state +3 to oxidation state +2 leading to the oxidation of the silver that forms the complex (Ag(SC(NH₂)₂)₃)⁺ with the thiourea. The thiourea also reacts partially with Fe³⁺ leading to the formation of formamide disulphide (C₂H₆N₄S₂) that decomposes into thiourea (SC(NH₂)₂), cyanamide (CN₂H₂) and sulphur. The leaching of the silver occurs according to the following chemical reactions:

Ag + Fe³⁺ + SC(NH₂)₂ → (Ag(SC(NH₂)₂)₃)⁺ + Fe²⁺ (1)

2 SC(NH₂)₂ + 2 Fe³⁺ → C₂H₆N₄S₂ + 2 Fe²⁺ + 2 H⁺ (2)

2 C₂H₆N₄S₂ → SC(NH₂)₂ + CN₂H₂ + S (3).

The leaching disclosed above can be carried out just once (single stage) or be repeated multiple times, thus in multiple stages, so as to extract most of the silver present in the solid material. If leaching is repeated multiple times, the various stages can be connected together with crossed currents or by countercurrent.

For each stage it is envisaged to replenish the consumed reagents, so as to maintain the concentration of reagents at the optimum value. The reagents are replenished according to the consumption thereof in the preceding stage. In general, the reagents are replenished according to the following amounts, which are expressed as % compared to the initial dosage of the reagents:

| | |
|---|---|
| CH₄N₂S | 25-50% |
| H₂SO₄ | 10-50%, |
| Fe₂(SO₄)₃ | 80-100%. |

At the end of the last leaching stage, the exiting leaching solution is filtered, by using a bag filter or a cartridge filter according to the type of treated solid material, and the residual solid material is washed with water. The extraction yield achieved at the end of the various leaching stages is greater than 95%.

The washing water can be recovered and used for the subsequent leaching stages in accordance with step II) or to treat a new solid material. In both cases, the water is reused after replenishing the reagents as disclosed above.

The leaching solution obtained from step I) is sent to an electrolysis cell, as disclosed in step III), for the recovery of the metallic silver at the cathode.

The reactions that occur during electrolysis are as follows:

Ag (SC(NH₂)₂)3+ + 3 e⁻→ Ag + 3 (SC(NH₂)₂) (4)

3 C₂H₆N₄S₂ + 3 H+ + 3 e⁻→ 3 SC(NH₂)₂ (5).

In order to optimize the silver recovery yield, the purity of the end product and the energy efficiency of this step of the process, numerous parameters have to be considered. In particular, it has been seen that: the shape and material of the electrodes, the distance between the electrodes, current density and stirring of the solution are of significant importance for the results listed above. The material of the cathode is selected in such a way as to ensure that the deposited silver remains in the metallic state, avoiding partial oxidations.

Different suitable materials can be used for the cathode, such as for example copper, silver, platinum. A graphite electrode can be used for the anode, because this material is an excellent conductor of electrons and is inert towards the solution present in the cell. The electrolysis has to be carried out by ensuring good stirring of the solution, so as to decrease the thickness of the limit layer near the electrodes.

In one embodiment, the electrodes are shaped in the form of a bar or sheet.

In one embodiment, the distance between the electrodes is 1 - 5 cm.

In one embodiment, the current density is 40-100 A/m².

In one embodiment, the voltage can be set in a range of 1.0 - 3.0 V. In another embodiment, the voltage is preferably set in the range 1.0 - 2.0 V.

In one embodiment, the solution is subjected to stirring at 250 rpm. In another embodiment, a pump of known type is used to enable the solution to recirculate and pass through the electrodes.

The silver recovery yield through the process according to the invention is greater than 95%, with purities also greater than 99.9% depending on the treated starting material.

Considering the leaching and electrolysis steps, an overall silver recovery yield greater than 90% is achieved.

The hydrometallurgical process according to the invention is highly advantageous, since the electrolysis enables the silver to be recovered in the metallic form thereof and the thiourea consumed during the leaching step to be partially regenerated. Owing to the partial regeneration of the thiourea, which is envisaged in step III, the solution exiting the electrolysis cell can be used for a new cycle on a waste material to be treated. In order to maintain the concentrations of reagents at the optimum value, in step IV reagents are added (replenishment). Moreover, after 3-5 process cycles, instead of replenishing the reagents as envisaged in step IV, the exiting leaching solution from step III can be removed from the cyclical leaching and electrolysis process and sent to a specific waste water treatment section, which enables the water deriving from such treatment to be reused to prepare new leaching solution to be used in the subsequent cycle (step V). In the waste water treatment section, an advanced chemical oxidation process is implemented, for example a homogeneous Fenton process. In such Fenton process, given the high iron content already present in the aqueous solution, it is necessary to dose only the oxidating agent H₂O₂ (without adding FeSO₄). The do treated aqueous solution is neutralized by adding calcium hydroxide until pH 7-8.5 is reached.

In one embodiment, the hydrometallurgical process according to the invention comprises an acid leaching pretreatment of the solid waste material. The aforesaid pretreatment can be carried out upstream of step I of the hydrometallurgical process according to the invention, in case it is assumed that there are high concentrations of base metals such as Cu, Al and/or Sn in the waste material to be treated and, in particular, in concentrations as high as or greater than the concentrations of silver.

In fact, if the aforesaid base metals were not preliminarily removed from the solid waste material, the hydrometallurgical process for the selective recovery of the silver could not be carried out. In this way, among other things, it is possible to recover from WEEE and exhausted Ag-based catalysts also metals that are different from Ag, such as precisely the above mentioned base metals.

In one embodiment, the acid leaching pretreatment is the one disclosed in WO2018215967A1, in which sulphuric acid 1.5 - 2.5 M and hydrogen peroxide 1.0 - 2.5 M are used as reagents. The base metals are then recovered selectively by precipitation and electrodeposition.

In another embodiment, the acid leaching pretreatment is carried out as disclosed in the Example 4 below.

By way of non-limiting example of the invention, the following Examples are disclosed below: leaching of rigid and flexible electronic boards with silver on surface (Example 1); electrolysis of the leaching solution with Ag⁺ (Example 2); leaching of the silver from photovoltaic panels (Example 3); acid leaching pretreatment of rigid electronic board (Example 4).

### Example 1 - Leaching of flexible electronic boards with silver on surface

A flexible electronic board, on the surface of which silver was present, was immersed inside a leaching solution according to the invention, containing sulphuric acid 0.2 M, ferric sulphate 22.5 g/L and thiourea 20 g/L. The solid material/liquid ratio was 10% p./vol. The leaching reaction was conducted at ambient temperature and atmospheric pressure for 1 hour, in the absence of stirring.

Leaching was repeated for two stages with crossed currents, with replenishment of the quantities of reagents consumed. At the end of the second leaching stage, the leaching solution was separated by filtration from the residual solid material and the latter was washed with water, using a volume of water equal to 30% of the leaching solution.

The final solution and the washing water were analyzed to determine the concentration of silver. The recovery of the silver was obtained with a yield greater than 90% and equal to about 65% after the first leaching stage.

### Example 2 - Electrolysis of the leaching solution with Ag⁺

An electrolysis test was performed for the recovery of silver ions that were previously solubilized owing to the use of a leaching solution according to the invention (aqueous solution of sulphuric acid, ferric sulphate and thiourea). In particular, a leaching solution with a concentration of silver equal to 500 mg/L was introduced into an electrolysis cell. A cathode consisting of a copper or silver bar and an anode consisting of a graphite or titanium bar were used. Voltage was set in the range 1.2 - 1.3 V and a current density of about 40-50 A/m² was detected. The recovery of silver as metallic silver after 2 hours was 95%.

### Example 3 - Leaching of silver from photovoltaic panels

End-of-life photovoltaic panels were subjected to a physical pretreatment - comprising delamination and removal of glass, shredding, grinding - so as to obtain powders, in particular powders having dimensions lesser than 2 mm. The so obtained powders were subjected to an acid leaching to dissolve copper, according to the procedure disclosed in WO2018215967A1. After filtration, an acid solution is obtained containing copper sulphate, from which it is possible to recover metallic copper by electrolysis at a current density of about 150 A/m².

The residual solid material, containing the silver, is immersed in a leaching solution according to the invention that is slightly acid (pH = 1) and contains sulphuric acid 0.2 M, ferric sulphate 22.5 g/L and thiourea 20 g/L. The solid material/liquid ratio was 10 % p./vol. The leaching reaction was conducted at ambient temperature and atmospheric pressure for 1 hour, with stirring at 250 rpm.

Leaching occurs in two stages with crossed currents, as disclosed in Example 1, and the silver is recovered by electrolysis, according to the conditions disclosed in Example 2.

### Example 4 - Acid leaching pretreatment of rigid electronic boards

Rigid electronic boards have been shredded, so as to obtain a powder formed of particles having dimensions between 1 and 5 mm. The aforesaid powder was immersed inside a leaching solution, containing sulphuric acid, in a concentration comprised in the range 1.5 - 2.5 M, and potassium persulphate, in a concentration comprised in the range 50 - 150 g/L. The solid material/liquid ratio was 15% p./vol. The leaching reaction was carried out at ambient temperature and atmospheric pressure for 2 hours, with stirring at 250 rpm. By filtering the exiting leaching solution, an acid solution is obtained containing copper and tin sulphate, from which it is possible to recover tin and copper. The tin is recovered by precipitation, adding to the acid solution a cationic polyelectrolyte, such as for example polyamines, with a dosage comprised in the range 2-50 ml/L (10% p/v). The metallic copper is recovered by electrodeposition, by subjecting the acid solution to electrolysis at a current density of about 150 A/m².T The procedure disclosed above can also be applied for recovering a base metal other than copper and tin, such as for example aluminium.

From what has been disclosed and exemplified previously, it can be affirmed that the hydrometallurgical process according to the invention enables the drawbacks to be effectively overcome that are found in the methods for the selective recovery of silver from waste materials that are comprised in the prior art.

Variations on and/or additions to what has been disclosed above are also possible. In particular, although the hydrometallurgical process according to the invention was implemented on the laboratory scale, the skilled person is able to vary and select as appropriate parameters and process conditions for implementing the aforesaid process on an industrial scale.

### BIBLIOGRAPHY

CN116984342A *"*Process method for comprehensively recycling waste photovoltaic panels" Qin, Y.; Guo, M.; Yao, D.; Dong, L.; Huang, Z. (2023).
CN115786713A *"*Method and System for Recovering Silver and Aluminum from Retired Solar Cell Panel" Han, Z.; Ding, Y.; Chen, S.; You, S.; Liu, M.; Guan Z. (2023).
WO2018215967A1 *"*Process for the Hydrometallurgical Treatment of Electronic Boards" Birloaga, I.; Vegliò, F.; De Michelis, I.; Ferella, F. (2018).

## Claims

1. Hydrometallurgical process for the selective recovery of silver from a solid waste material, said solid waste material deriving from waste electrical and electronic equipment and/or from exhausted Ag-based catalysts, said process comprising the following steps:
I) Subjecting said solid material to acid leaching to dissolve said silver by using a leaching solution, wherein said leaching solution is an aqueous solution of sulphuric acid, ferric sulphate and thiourea (H₂SO₄-Fe₂(SO₄)₃-CH₄N₂S), said subjecting to acid leaching being carried out at ambient temperature and at atmospheric pressure, in a single stage or in multiple stages; filtering the exiting leaching solution and subjecting the residual solid material to washing with water; wherein said sulphuric acid, said ferric sulphate and said thiourea are contained in said leaching solution at the following concentrations:
| | |
|---|---|
| Sulphuric acid | 0.1-0.5 M |
| Ferric sulphate | 10-40 g/L |
| Thiourea | 10-40 g/L; |
II) Recovering said water used during said washing in said step I, replenishing said water with said sulphuric acid, said ferric sulphate and said thiourea and, when said subjecting to acid leaching is carried out in multiple stages, using said water as a leaching solution in said multiple stages, wherein said replenishing said water comprises adding said sulphuric acid, said ferric sulphate and said thiourea according to the following percentages compared to the dosage thereof in said step I:
| | |
|---|---|
| Sulphuric acid | 10-50% |
| Ferric sulphate | 80-100% |
| Thiourea | 25-50%; |
III) Subjecting said leaching solution exiting from said step I to electrolysis under stirring to recover said silver as metallic silver at the cathode and regenerate said thiourea; recovering said leaching solution at the end of said electrolysis;
IV) Replenishing said leaching solution recovered at the end of said electrolysis in said step III with said sulphuric acid, said ferric sulphate and said thiourea, and, after said replenishing, reusing said leaching solution to treat a new solid waste material.

2. Hydrometallurgical process according to claim 1, further comprising a step V, wherein said leaching solution recovered at the end of said electrolysis in said step III is treated with an advanced chemical oxidation process, said advanced chemical oxidation process comprising a homogeneous Fenton process, so as to obtain water that is reusable to prepare a new leaching solution.

3. Hydrometallurgical process according to claim 1 or 2, wherein said sulphuric acid, said ferric sulphate and said thiourea are contained in said leaching solution at the following concentrations:
| | |
|---|---|
| Sulphuric acid | 0.2-0.4 M |
| Ferric sulphate | 20-30 g/L |
| Thiourea | 20-30 g/L |

4. Hydrometallurgical process according to any one of claims 1 to 3, wherein, in said step IV, said replenishing said leaching solution comprises adding said sulphuric acid, said ferric sulphate and said thiourea according to the following percentages compared to the dosage thereof in said step I:
| | |
|---|---|
| Sulphuric acid | 10-25% |
| Ferric sulphate | 100% |
| Thiourea | 10-30% |

5. Hydrometallurgical process according to any one of claims 1 to 4, wherein said subjecting to acid leaching is carried out at a concentration of said solid material that is equal to 10-20% of the volume of said leaching solution.

6. Hydrometallurgical process according to any one of claims 1 to 5, wherein said subjecting to acid leaching is carried out for a time of 1 - 3 hours.

7. Hydrometallurgical process according to any one of claims 1 to 6, wherein said subjecting to acid leaching is carried out under stirring.

8. Hydrometallurgical process according to any one of claims 1 to 7, wherein, when said subjecting to acid leaching is carried out in multiple stages, said multiple stages are connected to each other with crossed currents or by countercurrent.

9. Hydrometallurgical process according to any one of claims 2 to 8, comprising carrying out said step V after repeating said steps I to IV 3-5 consecutive times.

10. Hydrometallurgical process according to any one of claims 1 to 9, wherein said subjecting said leaching solution to electrolysis in said step III comprises using a cathode made of a material that is selected from the group consisting of: copper, silver and platinum.

11. Hydrometallurgical process according to any one of claims 1 to 10, wherein said waste electrical and electronic equipment is selected from the group consisting of: rigid electronic boards, flexible electronic boards and photovoltaic panels.

12. Hydrometallurgical process according to claim 11, wherein said solid waste material comprises powders that are obtained by subjecting said photovoltaic panels or said rigid electronic boards to a physical pretreatment.

13. Hydrometallurgical process according to any one of claims 1 to 12, further comprising, upstream of said step I, subjecting said solid waste material to an acid leaching pretreatment to recover any base metals that are contained in said solid waste material, said base metals comprising at least one of copper, aluminium or tin.

14. Hydrometallurgical process according to claim 13, wherein said acid leaching pretreatment comprises immersing said solid waste material in a leaching solution, said solution comprising sulphuric acid and potassium persulphate, wherein said sulphuric acid and said potassium persulphate are contained in said leaching solution at the following concentrations:
| | |
|---|---|
| Sulphuric acid | 1.5 - 2.5 M |
| Potassium persulphate | 50 - 150 g/L |

15. Hydrometallurgical process according to claim 13 or 14, wherein said acid leaching pretreatment is carried out at ambient temperature and at atmospheric pressure.

16. Hydrometallurgical process according to claim 14 or 15, comprising filtering said exiting leaching solution and subjecting said filtered leaching solution to precipitation and/or electrolysis to recover said base metals.
